# EUROPÄISCHE PATENTANMELDUNG

(11) **EP 2 529 915 A2**
(43) Veröffentlichungstag der Anmeldung: **05.12.2012**
(21) Anmeldenummer: 12169539.9
(22) Anmeldetag: 25.05.2012
(51) Int. Cl.: B29C 49/48, B29C 49/56

(54) **Vorrichtung und Anlage zum Streckblasen von Kunststoffvorformlingen sowie Verwendung eines Keramikbauteils**

(30) Priorität: 03.06.2011 DE 102011104316
(71) Anmelder: Krones AG, 93073 Neutraubling (DE)
(72) Erfinder: Geltinger, Florian, 93093 Donaustauf (DE); Neubauer, Michael, 93053 Regensburg (DE)
(74) Vertreter: Bittner, Bernhard

(57) **Zusammenfassung**

Die Erfindung betrifft eine Vorrichtung (1) zum Streckblasen von Kunststoffvorformlingen zu Kunststoffbehältnissen mit einer Trageinrichtung (2) zum Tragen einer Blasform (3) umfassend wenigstens zwei Schalenteile (4, 5) und ein Bodenteil (6) und mit einer Bodenteilklemmeinrichtung (10) umfassend eine Bodenteilaufnahme (11; 111) und Halteeinrichtungen (12, 13 bzw. 14, 15; 114, 115) zum Halten der Bodenteilaufnahme (11; 111), bei welcher die Bodenteilaufnahme (11; 111) über eine Formschlussverbindung (18; 118) mit den Halteeinrichtungen (12, 13 bzw. 14, 15; 114, 115) verklemmbar ist, bei welcher die Formschlussverbindung (18; 118) keramisch ausgestalte Formschlussbereiche (22) aufweist. Die Erfindung betrifft auch die Verwendung eines Keramikbauteils (14, 15; 28, 30; 143, 144, 147) und/oder eines mit einer Keramik zumindest teilweise beschichten Funktionsbauteils als Schmiermittelersatz an einer Formschlussverbindung (18; 118) einer Streckblasvorrichtung (1) in einem Reinraum (20).

## Beschreibung

Die Erfindung betrifft eine Vorrichtung zum Blasformen und insbesondere zum Streckblasen von Kunststoffvorformlingen zu Kunststoffbehältnissen mit einer Trageinrichtung zum Tragen einer Blasform umfassend wenigstens zwei Schalenteile und ein Bodenteil und mit einer Bodenteilklemmeinrichtung umfassend eine Bodenteilaufnahme und Halteeinrichtungen zum Halten der Bodenteilaufnahme, bei welcher die Bodenteilaufnahme über eine Formschlussverbindung mit den Halteeinrichtungen verklemmbar ist. Die Halteeinrichtungen können bevorzugt als an den Schalenteilen befestigtes zusätzliches Teil, um auf Grund von Verschleiß leicht ausgewechselt werden zu können, oder aber auch als Teil der Schalenteile ausgebildet sein.

Darüber hinaus betrifft die Erfindung eine Anlage zum Umformen und insbesondere zum Streckblasen von Kunststoffvorformlingen zu Kunststoffbehältern mit einem Reinraum und mit wenigstens einer Blasstation umfassend eine Blasform zur Formgebung der Kunststoffvorformlinge.

Ebenso betrifft die Erfindung eine Verwendung eines Keramikbauteils und/oder eines mit einer Keramik zumindest teilweise beschichteten Funktionsbauteils.

Gattungsgemäße Streckblasvorrichtungen existieren in vielen Variationen, und mit Ihnen können insbesondere Getränkeflaschen aus Kunststoff gut hergestellt werden. Hierzu wird in einer Blasform ein Kunststoffvorformling eingebracht und mittels eines Prozessdrucks zu dem eigentlichen Kunststoffbehältnis expandiert, in welches anschließend ein Getränk eingefüllt und bevorratet werden kann. Damit das in der Blasform durch Expansion des Kunststoffvorformlings geformte Kunststoffbehältnis aus dieser auch entformt werden kann, weist die eigentliche Blasform üblicherweise mehrere voneinander trennbare Teile, nämlich zwei seitliche Schalenteile und ein hierzu verklemmbares Bodenteil auf.

Die zwei seitlichen Schalenteile und das Bodenteil bilden in ihrer Gesamtheit mit ihrer Innenkontur die Negativform des herzustellenden Kunststoffbehältnisses ab. Beim Expandieren des Kunststoffvorformlings treten relativ große Presskräfte auf, die insbesondere auch auf das Bodenteil wirken und die dieses nach unten drücken. Während auf die beiden Schalenteile radial wirkende Presskräfte von einer Trageinrichtung zum Tragen der beiden Schalenteile aufgenommen werden, müssen auf das Bodenteil eher axial wirkende Presskräfte ebenfalls in die Trageinrichtung bzw. in eine Bodenteilklemmeinrichtung eingeleitet werden.

Hierzu umfasst die Trageinrichtung bzw. die Bodenteilklemmeinrichtung eine entsprechende Bodenteilhalterung. Die Bodenteilhalterung darf sich aufgrund der axial wirkenden Presskräfte weder verformen noch darf sich das Bodenteil von den Schalenteilen abheben, da sich sonst ein Formspalt zwischen den Schalenteilen und dem Bodenteil ausbilden kann, der später am Kunststoffbehältnis als unschöner Abdruck zu erkennen ist. Insbesondere aus diesem Grund wird die Bodenteilaufnahme idealerweise über eine formschlüssige Verbindung an Halteschalen der Bodenteilklemmeinrichtung abgestützt.

Gleichzeitig kann das Bodenteil mittels der formschlüssigen Verbindung gegenüber den beiden Schalenteilen zentriert werden. Um bereits bei der Herstellung des Kunststoffbehältnisses höchsten Ansprüchen an Hygieneanforderungen gerecht werden zu können, findet sowohl ein Blasprozess der Kunststoffbehälter als auch ein späterer Abfüllprozess oftmals in Reinräumen statt. Problematisch gestaltet sich insbesondere in diesem Zusammenhang, dass die Bauteile Bodenteilaufnahmen/Halteschalen beim Herstellen der formschlüssigen Verbindung oftmals mit einem Schmiermittel versehen werden müssen. Schmiermittel sind insbesondere bei hygienisch anspruchsvollen Aufgaben, insbesondere in Reinräumen, auf Grund ihrer Keimbildung unterstützenden Wirkung unerwünscht. Aus diesem Grund wird bereits seit längerem versucht, den Schmiermitteleinsatz zu minimieren oder idealweise auf diesen in Gänze zu verzichten.

Beispielsweise ist aus der WO 2009/156698 A2 eine mehrteilige Blasform einer Blasmaschine für Kunststoffvorformlinge bekannt, bei welcher eine Bodenteilaufnahme der Blasform mit seitlich an das Bodenteil heran schwenkbaren Klemmeinrichtungsbauteilen gegenüber Seitenschalen der Blasform formschlüssig fixiert werden kann. Um hinsichtlich einer Formschlussverbindung zwischen den Klemmeinrichtungsbauteilen und dem zu fixierenden Bodenteil einen Schmiermitteleinsatz überflüssig machen zu können, sind die direkt miteinander korrespondierenden Formschlussbauteile mit einem Kunststoff-Verbundmaterial verkleidet. Dies ist konstruktiv dadurch erzielt, indem einerseits das Bodenteil an seinem Umfang und andererseits die Klemmeinrichtungsbauteile mit einem Kunststoff-Verbundmaterial verkleidet sind, sodass im Wesentlichen nur die Kunststoff-Verbundmaterialien in Wirkkontakt stehen. Hierdurch können ausreichend gut gleitfähige Formschlussbauteile bereitgestellt werden, sodass auf ein Schmiermittel verzichtet werden kann. Kunststoff-Verbundmaterialien unterliegen jedoch insbesondere einem erhöhten Verschleiß als herkömmliche Stahlbauteile.

Insofern ist es Aufgabe der Erfindung, bei ausreichend guten Gleiteigenschaften eine annähernd herkömmliche Standfestigkeit einer bekannten Stahlformschlussverbindung ohne zusätzliche Schmiermittel zu erzielen.

Die Aufgabe der Erfindung wird von einer Vorrichtung zum Umformen und insbesondere Streckblasen von Kunststoffvorformlingen zu Kunststoffbehältnissen mit einer Trageinrichtung zum Tragen einer Blasform umfassend wenigstens zwei Schalenteile und ein Bodenteil und mit einer Bodenteilklemmeinrichtung umfassend eine Bodenteilaufnahme und Halteeinrichtungen zum Halten der Bodenteilaufnahme, bei welcher die Bodenteilaufnahme über eine Formschlussverbindung mit den Halteeinrichtungen verklemmbar ist, gelöst, wobei die Formschlussverbindung keramisch ausgestalte Formschlussbereiche aufweist.

Erfindungsgemäß wird ein keramischer Werkstoff zum Ausgestalten der Formschlussverbindung verwendet, wodurch vorteilhafter Weise bei gleichzeitiger Gewährleistung einer sehr hohen Standfestigkeit dennoch wesentlich bessere Gleiteigenschaften an miteinander korrespondierenden bzw. an ineinander eingreifenden Formschlussverbindungsbauteilen erzielt werden können, als dies bei bekannten Formschlussverbindungen an Blasformen der Fall ist. Speziell ein keramischer Werkstoff zeichnet sich durch wesentlich verschleißfestere Eigenschaften aus und besitzt ein sehr geringes Wärmeausdehnungsverhalten, wodurch sich die vorliegende Formschlussverbindung nochmals deutlich von dem eingangs genannten Stand der Technik abhebt. Insofern ist die Formschlussverbindung außerordentlich verschleißfest und erfordert aufgrund der guten Gleitfähigkeit keine zusätzliche Schmierung.

Im Sinne der Erfindung, werden als keramischer Werkstoff auch keramische Verbundwerkstoffe angesehen.

Besonders vorteilhaft ist es vorliegend, wenn die keramischen Formschlussbereiche etwa bei einem Garniturenwechsel, wie dies beispielsweise bei einem Wechsel von verschiedenen Blasformen der Fall ist, an der Vorrichtung verbleiben. Hierdurch kann die Anzahl der erforderlichen keramischen Bauteile, wie sie nachstehend noch detaillierter erläutert sind, gering gehalten werden, wodurch wiederum die Kosten reduziert werden können.

Insofern ist es von außergewöhnlichem Vorteil, wenn die keramischen Formschlussbereiche bzw. diesbezügliche Bauteile an der Trageinrichtung zum Tragen der Blasform unmittelbar oder mittelbar, etwa über entsprechende Flanschverbindungen, auswechselbar angeordnet sind. So können sie bei einem Garniturenwechsel an der vorliegenden Vorrichtung dauerhaft verbleiben und vorteilhaft hinsichtlich einer anderen Blasform weiter verwendet werden. Sie brauchen erst bei einem kritischen Verschleiß ausgetauscht zu werden.

Allein durch diese letztgenannten Merkmale kann die vorliegende erfindungsgemäße Vorrichtung gegenüber dem Stand der Technik besonders vorteilhaft weiterentwickelt werden, da diese wesentlich dazu beitragen, dass eine Keramik hinsichtlich der vorliegenden Formschlussverbindung wirtschaftlicher einsetzbar wird.

Darüber hinaus wird die Aufgabe der vorliegenden Erfindung durch die Verwendung eines Keramikbauteils und/oder eines mit einer Keramik zumindest teilweise beschichten Funktionsbauteils als Schmiermittelersatz an einer Formschlussverbindung einer Streckblasvorrichtung in einem Reinraum gelöst. Erfindungsgemäß kann mittels eines derartigen Bauteils auf ein zusätzliches Schmiermittel in einem Reinraum der Streckblasanlage zur Getränkeflaschenherstellung mit hohen hygienischen Ansprüchen verzichtet werden.

Um die vorliegende Streckblasvorrichtung konstruktiv besonders kompakt bauen zu können, ist es von besonderem Vorteil, wenn die Formschlussverbindung eine Anschlusseinrichtung zum Zuführen eines Temperiermediums umfasst. Beispielsweise ist eine die Formschlussverbindung bildendes bzw. aufweisende Bodenteilaufnahme mit einer solchen Anschlusseinrichtung ausgestattet, wobei die Bodenteilaufnahme vorzugsweise vollständig als Keramikbauteil oder Keramikbauteilgruppe hergestellt ist.

Um die Bodenteilaufnahme, welche bevorzugt scheibenförmig ausgestaltet ist, mit den Halteeinrichtungen der Bodenteilklemmeinrichtung gut halten bzw. klemmen zu können, umfassen diese vorzugsweise entsprechende Halteschalen.

Die vorliegende Formschlussverbindung kann vielfältig ausgestaltet werden. Bewährt haben sich auf dem Gebiet der Blasformen insbesondere Verbindungen, mit sich radial überlappend zusammenwirkenden Klemmelementen, mittels welchen insbesondere axial auf die Bodenteilaufnahme wirkende Hauptkräftebeaufschlagungen aufgenommen werden können, ohne dass hierbei die radial überlappend zusammenwirkenden Klemmelemente kritisch zueinander verrutschen. Hierbei reicht es bereits aus, wenn ein stegartiges Klemmelement radial bis hinter eine entsprechende Hinterschneidung ragt. Beispielhaft hierzu ist eine Feder-Nut-Formschlussverbindung näher beschrieben.

Deshalb ist es vorteilhaft, wenn die vorliegende Formschlussverbindung eine Feder-Nut-Einrichtung umfasst, bei welcher eine Feder und/oder eine Nut der Bodenteilklemmeinrichtung zumindest teilweise keramisch ausgestaltet sind. Feder-Nut-Einrichtungen sind sehr robust und zeichnen sich auch durch ihre Einfachheit aus.

Da bei einer Feder-Nut-Formschlussverbindung hauptsächlich die Feder und die Nut zusammenwirken, ist es vorteilhaft, wenn diese zumindest teilweise aus einem keramischen Werkstoff bestehen, insbesondere im Bereich diesbezüglicher Gleitflächen.

Um insbesondere eine gute Zentrierung der Bodenteilaufnahme gegenüber den Halteschalen zu erzielen, ist es vorteilhaft, wenn die miteinander zu der Formschlussverbindung korrespondierenden Bauteile, insbesondere die Feder und die Nut der Feder-Nut-Einrichtung, eine prismatische Kontur aufweisen.

Der Begriff "Feder-Nut-Einrichtung" beschreibt im Sinne der Erfindung jegliche Verbindungseinrichtung, bei welcher mittels wenigstens eines Stegs, der in wenigstens eine Hinterschneidung der Ausnehmung eingreift, eine formschlüssige Verbindung zwischen miteinander korrespondierenden Bauteilen hergestellt werden kann.

Dabei ist es möglich, dass die Nut an der Bodenteilaufnahme und die Feder an der Halteeinrichtung angeordnet sind. Es wäre jedoch auch die umgekehrte Anordnung denkbar.

Die vorliegende Bodenteilklemmeinrichtung kann einstückig mit einer Trageinrichtung zum Tragen und Betätigen der Schalenteile der Blasform ausgestaltet sein. Vorzugsweise kann die Bodenteilklemmeinrichtung auch als separates Bauteil an der Trageinrichtung angeordnet sein.

Weist eine Feder der Bodenteilklemmeinrichtung wenigstens einen keramischen Grundkörper auf, welcher - bevorzugt - als Einlegeteil an der Bodenteilklemmeinrichtung - insbesondere - auswechselbar gelagert ist, kann die Feder im Bedarfsfall schnell und problemlos ausgetauscht werden. Insofern können auch Wartungs- und/oder Reparaturarbeiten vorteilhaft durchgeführt werden.

Weist kumulativ oder alternativ eine Nut der Bodenteilklemmeinrichtung wenigstens einen keramischen Grundkörper auf, welcher - insbesondere - als Einlegeteil an der Bodenteilklemmeinrichtung - bevorzugt auswechselbar - gelagert ist, können auch hinsichtlich der Nut die für die Feder erzielten Vorteile erreicht werden.

Vorteilhafter Weise können die übrigen Bauteile bzw. Bauteilgruppen der Bodenteilklemmeinrichtung hierbei aus Stahl gebaut sein, wie herkömmlich praktiziert.

Eine weitere vorteilhafte Ausführungsvariante sieht vor, dass die Bodenteilaufnahme und/oder die Halteeinrichtungen bzw. die Halteschalen vollständig keramisch ausgestaltet sind. Diese Ausführungsvariante besitzt den Vorteil der einfachen Herstellbarkeit, da hierbei nicht zwingend Keramik-Metall-Verbundbauteile produziert werden müssen.

Beispielsweise sind nur die Halteschalen vollständig aus Keramik hergestellt, während die Bodenteilaufnahme vorteilhafter Weise weiterhin aus Stahl gefertigt ist, so dass die Bodenteilaufnahme herkömmlicher Art sein kann, oder umgekehrt.

Gemäß einem weiteren Aspekt der Erfindung wird die vorliegende Aufgabe auch von einer Vorrichtung zum Streckblasen von Kunststoffvorformlingen zu Kunststoffbehältnissen mit einer Trageinrichtung zum Tragen einer Blasform umfassend wenigstens zwei Schalenteile und ein Bodenteil und mit einer Bodenteilklemmeinrichtung umfassend eine Bodenteilaufnahme und Halteeinrichtungen zum Halten der Bodenteilaufnahme, bei welcher die Bodenteilaufnahme über eine Formschlussverbindung mit den Halteeinrichtungen verklemmbar ist, gelöst, wobei die Streckblasvorrichtung sich dadurch auszeichnet, dass die Bodenteilklemmeinrichtung eine Bodenteilaufnahme und Halteeinrichtungen bzw. Halteschalen zum Halten der Bodenteilaufnahme umfasst, bei welcher sowohl die Bodenteilaufnahme als auch die Halteeinrichtungen bzw. Halteschalen jeweils wenigstens eine Nut aufweisen, welche mittels wenigstens einem Nutstein derart miteinander korrespondierenden, dass die Bodenteilaufnahme und die Halteeinrichtungen bzw. Halteschalen formschlüssig miteinander verbunden sind, wobei vorteilhaft der Nutstein aus einem Werkstoff hergestellt ist, welcher von dem Material der Bodenteilaufnahme und der Halteeinrichtungen bzw. Halteschalen verschieden ist.

Diese Lösung zeichnet sich insbesondere durch ihren außergewöhnlich einfachen Aufbau aus, mit welchem es gelingt, insbesondere eine keramische Formschlussverbindung mit einer sehr geringen Anzahl an Keramikbauteilen an einer Blasform zu realisieren. Hierdurch ist auch eine einfache Nachrüstung bestehender Blasformen problemlos möglich.

Insofern ist es vorteilhaft, wenn der Nutstein einen keramischen Grundkörper aufweist.

Weist eine Bodenteilaufnahme der Bodenteilklemmeinrichtung radial außen eine Hinterschneidung mit wenigstens zwei Nuten auf, wobei die Nuten in Umfangsrichtung der Bodenteilaufnahme durch Materialausnehmungen, welche sich radial bis weiter nach innen erstrecken als die Hinterschneidung, voneinander getrennt angeordnet sind, können Nutsteine innerhalb der Nuten besonders gut fixiert und gegen eine unbeabsichtigte Verlagerung in Umfangsrichtung gesichert werden.

Um Anbindungsbereiche insbesondere zwischen dem Bodenteil der Blasform und der Bodenteilaufnahme der Bodenteilklemmeinrichtung hygienisch gut abdichten zu können, ist es vorteilhaft, wenn die Bodenteilaufnahme gegenüber dem Bodenteil mittels wenigstens einer O-Ringdichtung abgedichtet ist. Hierdurch kann die Gefahr eines hygienischen Risikos weiter reduziert werden.

Eine besonders bevorzugte Ausführungsvariante sieht vor, dass die Streckblasvorrichtung in einem Reinraum einer Anlage zum Streckblasen von Kunststoffvorformlingen angeordnet ist. Ein Anordnen der vorliegenden Streckblasvorrichtung in einem Reinraum ist besonders sinnvoll, da in dem Reinraum ein Einsatz von Schmiermitteln unter hygienischen Gesichtspunkten sehr kritisch zu betrachten ist. Mittels der erfindungsgemäßen Streckblasvorrichtung kann aber auf den Einsatz von derartigen Schmiermitteln zum Schmieren der Formschlussverbindung verzichtet werden. Ein derartiger aseptischer Aufbau einer Blasmaschine ist aus der WO 2010/020529 A2 der vorliegenden Anmelderin bekannt. Der Offenbarungsgehalt dieser Druckschrift wird hiermit durch Bezugnahme vollständig zum Offenbarungsgehalt der vorliegenden Anmeldung gemacht. Vorteilhaft ist der Sterilraum kanalartig um den Transportpfad der Blasstation ausgebildet. Vorteilhaft sind auch Bereiche eines Trägers, an dem die Blasformteile angeordnet sind, außerhalb des bevorzugten Reinraumes angeordnet.

Darüber hinaus wird die Aufgabe der Erfindung auch von einer Anlage zum Streckblasen von Kunststoffvorformlingen zu Kunststoffbehältern mit einem Reinraum und mit wenigstens einer Blasstation umfassend eine Blasform zur Formgebung der Kunststoffvorformlinge gelöst, wobei sich die Streckblasanlage durch eine Streckblasvorrichtung nach einem der hier beschriebenen Merkmale auszeichnet. Vorteilhaft weist die Anlage eine Vielzahl von Blasvorrichtungen und insbesondere Streckblasvorrichtungen der oben beschriebenen Art auf.

Insbesondere hierdurch kann der Problematik der Verwendung von Schmiermitteln im Reinraum und an der Blasform konstruktiv besonders einfach und kostengünstig entgegen getreten werden.

Eine Fixierung aller vorgenannten Bauteile, insbesondere der Bodenteilaufnahme und der Halteschalen sollte idealerweise in einer mikrobiologisch einwandfreien Funktionsweise an die Streckblasvorrichtung erfolgen, vorzugsweise mittels einer Schraubverbindung. Dies hat insbesondere den Vorteil, dass diese Bauteile bei Verschleiß oder Defekt leicht ausgetauscht werden können. Zudem sind sie einfach zu sterilisieren.

Zusammenfassend kann festgehalten werden, dass hinsichtlich des Einsatzes eines Keramikwerkstoffes insbesondere folgende Ausführungsvarianten besonders vorteilhaft sind, nämlich erstens, dass speziell in den Halteschalen lösbare Einlegeteile aus einem keramischen Werkstoff befestigbar und die restlichen Bauteile aus Stahl hergestellt sind. Zweitens können die lösbaren Einlegeteile alternativ in der Bodenteilaufnahme befestigt sein und die restlichen Bauteile sind aus Stahl hergestellt. Drittens können die Halteschalen komplett aus einem keramischen Werkstoff bestehen und viertens kann die Bodenteilaufnahme kumulativ oder alternativ aus einem keramischen Werkstoff bestehen.

Ein besonderer Vorteil der Erfindung gegenüber dem Stand der Technik besteht darin, dass sich die Keramik nicht in bzw. an einem Wechselteil, wie z.B. Blasform, Bodenteil etc., befindet, sondern an einem Teil, der auch bei einem Garniturenwechsel in der Blasstation verbleibt, vorzugsweise an der Bodenteilklemmeinrichtung.

Weitere Vorteile, Ziele und Eigenschaften vorliegender Erfindung werden anhand anliegender Zeichnung und nachfolgender Beschreibung erläutert, in welchen beispielhaft eine erfindungsgemäße Streckblasvorrichtung mit unterschiedlich gestalteten Bodenteilklemmeinrichtungen dargestellt und beschrieben ist. In der Zeichnung zeigen:
- Figur 1: schematisch eine Ansicht einer Streckblasvorrichtung mit einer teilweise geöffneten Blasform umfassend wenigstens zwei Schalenteilen und ein Bodenteil und mit einer Trageinrichtung umfassend eine Bodenteilklemmeinrichtung mit einer Bodenteilaufnahme und Halteschalen;
- Figur 2: schematisch eine erste Detailansicht der Bodenteilklemmeinrichtung;
- Figur 3: schematisch eine weitere Detailansicht der Bodenteilklemmeinrichtung;
- Figur 4: schematisch ein Ausführungsbeispiel einer kreisrunden Bodenteilaufnahme;
- Figur 5: schematisch ein Ausführungsbeispiel einer rechteckigen Bodenteilaufnahme; und
- Figur 6: schematisch eine Ansicht von Bauteilen einer alternativen Bodenteilklemmeinrichtung.

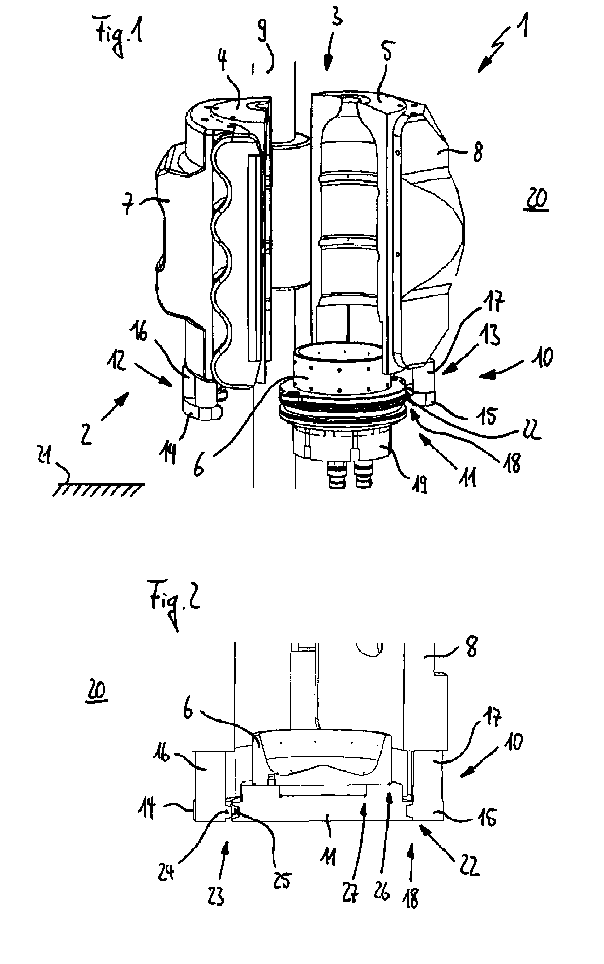

Die in der Figur 1 gezeigte Vorrichtung 1 zum Streckblasen von Kunststoffvorformlingen (hier nicht gezeigt) zu Kunststoffbehältnissen (hier ebenfalls nicht gezeigt) umfasst eine Trageinrichtung 2 zum Tragen einer Blasform 3 im Wesentlichen bestehend aus einem ersten seitlichen Schalenteil 4, einem zweiten seitlichen Schalenteil 5 und einem Bodenteil 6, wobei die beiden Schalenteile 4 und 5 und das Bodenteil 6 für die Formgebung des jeweiligen Kunststoffbehältnisses verantwortlich sind.

Die Trageinrichtung 2 ist zweigeteilt und besitzt eine erste Trageinrichtungshälfte 7 zum Tragen des ersten seitlichen Schalenteils 4 und eine zweite Trageinrichtungshälfte 8 zum Tragen des zweiten seitlichen Schalenteils 5. Die beiden Trageinrichtungshälften 7 und 8 sind hierbei bezüglich einander schwenkbar an einer Tragstange 9 gelagert, so dass mit ihnen die beiden seitlichen Schalenteile 4 und 5 in bekannter Weise öffenbar bzw. schließbar sind.

Unterseitig der Trageinrichtung 2 ist eine Bodenteilklemmeinrichtung 10 im Wesentlichen bestehend aus einer Bodenteilaufnahme 11, einer ersten Halteeinrichtung 12 und einer zweiten Halteeinrichtung 13 lösbar befestigt, wobei mittels der beiden Halteeinrichtungen 12 und 13 die Bodenteilaufnahme 11 und damit auch das Bodenteil 6 insbesondere gegenüber den beiden Schalenteilen 4 und 5 gehalten und geklemmt werden können.

Die beiden Halteeinrichtungen 12 und 13 bestehen hierbei aus Halte- bzw. Halbschalen 14 und 15, wobei die erste Halbschale 14 mittels einer Flanschverbindung 16 an die erste Trageinrichtungshälfte 7 und die zweite Halbschale 15 mittels einer weiteren Flanschverbindung 17 an die zweite Trageinrichtungshälfte 8 angeflanscht sind.

Somit können insbesondere die Halte- bzw. Halbschalen 14 und 15, aber meistens auch die Bodenteilaufnahme 11 bei einem Garniturenwechsel etwa hinsichtlich der Blasform 3 an der Vorrichtung 1 vorteilhaft beibehalten werden.

Damit die Bodenteilaufnahme 11 von den beiden Halbschalen 14 und 15 derart betriebssicher geklemmt werden kann, dass sich die Bodenteilaufnahme 11 und/oder das Bodenteil 6 der Blasform 3 weder kritisch verformen noch von den beiden Schalenteilen 4 und 5 der Blasform aufgrund eines Pressdrucks innerhalb der Blasform 3 kritisch abheben können, ist die Bodenteilaufnahme 11 im Betrieb der Blasform 3 mittels einer Formschlussverbindung 18 mit den beiden Halbschalen 14 und 15 formschlüssig verklemmt. Zum Temperieren der Blasform 3 ist unterseitig der Bodenteilaufnahme 11 ein entsprechender Anschluss 19 für ein Temperiermedium, insbesondere ein Kühlmedium, vorgesehen. Die Vorrichtung weist weiterhin eine (nicht gezeigte) Blasdüse zum Expandieren der Kunststoffvorformlinge auf.

Da die hier gezeigte Streckblasvorrichtung 1 vorteilhaft in einem Reinraum 20 einer Anlage 21 zum Streckblasen (hier nicht explizit gezeigt) platziert ist, um etwa hygienischen Anforderungen beim Streckblasen der Kunststoffvorformlinge in dem Reinraum 20 gerecht zu werden, sollte auf Schmiermittel (hier nicht gezeigt) insbesondere auch an der Formschlussverbindung 18 verzichten werden.

Als Schmiermittelersatz ist erfindungsgemäß die vorliegende Formschlussverbindung 18 mit keramisch ausgestalteten Formschlussbereichen 22 (siehe insbesondere Figur 2) ausgestattet. Miteinander reibende keramisch ausgestaltete Bereiche können auch ohne zusätzliche Schmiermittel problemlos aufeinander gleiten. Zudem weisen diese keramisch ausgestalteten Formschlussbereiche 22 gute Härteeigenschaften aus und sind diesbezüglich auch entsprechend verschleißfest.

Hierbei können die für die Formschlussverbindung 18 konstruktiv verantwortlichen Bauteile entweder mit einer Keramik verkleidet bzw. beschichtet sein.

Oder sie sind als massive Keramikbauteile konstruiert, wie dies bei den in den Figuren 1 bis 3 gezeigten Halbschalen 14, 15 der Fall ist, die vollständig aus einer Keramik hergestellt sind.

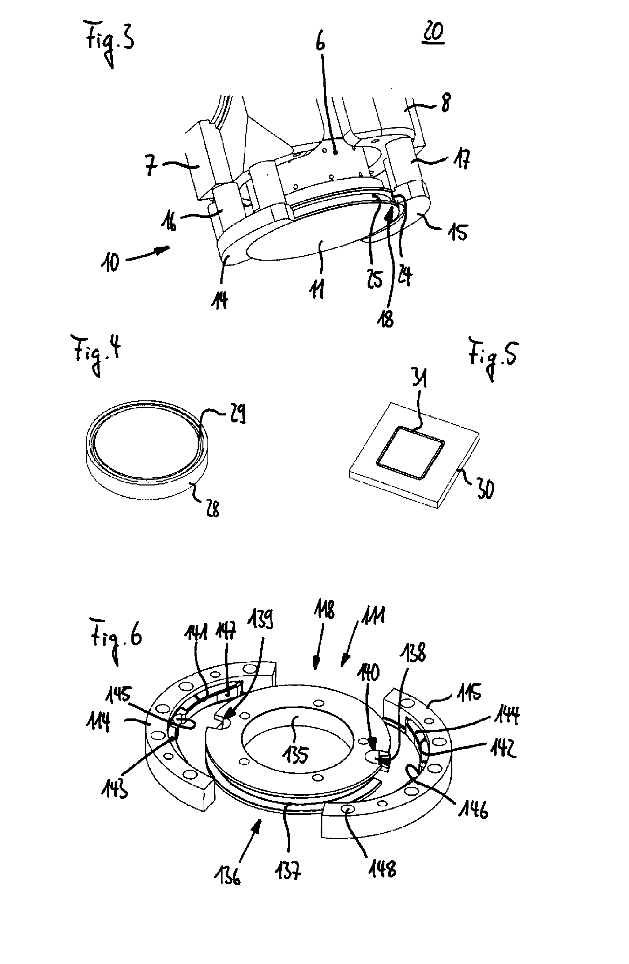

Die in den Figuren 2 und 3 detaillierter gezeigte Formschlussverbindung 18 zeichnet sich durch eine konstruktiv einfach realisierte Feder-Nut-Einrichtung 23 aus, die gemäß diesem ersten Ausführungsbeispiel halteschalenseitig eine Feder 24 und bodenteilaufnahmeseitig eine Nut 25 aufweist.

Hierbei sind die beiden Halbschalen 14 und 15 als Massivkeramikbauteile hergestellt. Dadurch, dass die Halbschalen 14, 15 an die jeweilige Trageeinrichtungshälfte 7 bzw. 8 lösbar angeflanscht sind, können selbst bestehende Streckblasvorrichtungen 1 vorteilhaft nachgerüstet werden.

Die Bodenteilaufnahme 11 ist in diesem Ausführungsbeispiel vorteilhafter Weise aus Stahl gefertigt, so dass die Bodenteilaufnahme 11 auch herkömmlicher Art sein kann.

Gut zu erkennen ist, dass das Bodenteil 6 der Blasform 3 an der Bodenteilaufnahme 11 befestigt ist, wobei unterseitig des Bodenteils 6 eine erste O-Ring-Dichtung 26 und einer zweite, radial weiter innenliegende O-Ring-Dichtung 27 angeordnet sind, um unerwünschte Spalten an den Kontaktflächen vermeiden bzw. abdichten zu können. Hierdurch kann ein hygienisches Risiko vorteilhaft weiter reduziert werden. Dabei ist es möglich, dass die Bodenteilaufnahme 11 und/oder das Bodenteil 6 an den beiden O-Ring-Dichtungen 26 und 27 zu deren besseren Platzierung mit entsprechenden O-Ring-Aufnahmenuten (hier nicht explizit beziffert) versehen sein können.

Die in der Figur 4 gezeigte kreisrunde keramische Bodenteilaufnahme 28 zeichnet sich durch eine oberseitige kreisförmige O-Ring-Aufnahmenut 29 aus, in welche eine O-Ring-Dichtung 26 oder 27 einlegbar ist. Diese kreisrunde Bodenteilaufnahme 28 ist als Drehteil sehr einfach und kostengünstig herstellbar.

Die in der Figur 5 gezeigte im Wesentlichen rechteckige alternative keramische Bodenteilaufnahme 30 zeichnet sich durch eine oberseitige quadratische O-Ring-Aufnahme 31 aus, in welche ebenfalls eine O-Ring-Dichtung 26 bzw. 27 einlegbar ist. Die rechteckige Bodenteilaufnahme 30 ist als Frästeil in der Regel jedoch aufwändiger herzustellen.

Bei dem in der Figur 6 gezeigten besonders vorteilhaften Ausführungsbeispiel liegen eine alternative Bodenteilaufnahme 111 für die vorliegende Streckblasvorrichtung 1 als ein Zentralring 135 und alternative Halbschalen 114 und 115 für die vorliegende Streckblasvorrichtung 1 jeweils in Stahlbauweise vor.

Hierbei weist einerseits die Bodenteilaufnahme 111 radial außen eine Hinterschneidung 136 mit einer ersten Außennut 137 und einer zweiten Außennut 138 auf, wobei die beiden Außennuten 137, 138, in Umfangsrichtung der Bodenteilaufnahme 111 gesehen, durch Materialausnehmungen 139 und 140 voneinander getrennt angeordnet sind. Die Materialausnehmungen 139 und 140 verlaufen zum einen als sich axial durch die Bodenteilaufnahme 111 erstreckende Ausklinkungen durch diese hindurch und erstrecken sich zum anderen radial bis weiter nach innen als die Hinterschneidung 136.

Andererseits weisen die Halbschalen 114 und 115 jeweils eine Innennut 141 und 142 auf, wobei sich im ordnungsgemäßen Betriebszustand der Streckblasvorrichtung 1 die Öffnungen der Außennuten 137 und 138 und die der Innennuten 141 und 142 gegenüber liegen, sodass die Bodenteilaufnahme 111 und die beiden Halteschalen 114 und 115 mittels Nutsteinen 143 und 144 formschlüssig miteinander verbunden sind. Hierbei greifen die Nutsteine 143, 144 sowohl in die jeweilige ihnen zugeordnete Außennut 137 bzw. 138 als auch in die jeweilige ihnen zugeordnete Innennut 141 bzw. 142 ein.

Die Nutsteine 143 und 144 sind in dem Ausführungsbeispiel gemäß der Figur 6 jeweils aus einem Keramikwerkstoff hergestellt, wodurch eine vorteilhafte Formschlussverbindung 118 zwischen den beteiligen Bauteilen realisiert ist.

Dabei ist es möglich, dass die Bodenteilaufnahme 111 und/oder die beiden Halbschalen 114 und 115 ebenfalls aus einem Keramikwerkstoff bestehen können, falls dies bei bestimmten Ausführungsvarianten vorteilhaft ist.

Die Nutsteine 143 und 144 weisen im Bereich der Materialausnehmungen 139 und 140 hierzu korrespondierende Aussparungen 145 und 146 auf, sodass die Nutsteine 143, 144 und die Bodenteilaufnahme 111 zueinander verdrehgesichert sind.

Es spielt hierbei keine Rolle, ob die Nutsteine 143 und 144 als ein lösbares Einlegeteil 147 (hier nur exemplarisch beziffert) in den Außennuten 137 und 138 oder in den Innennuten 141 und 142 fixiert sind.

Zur Fixierung sind die Nutsteine 143 und 144 mittels Schraubverbindungen (hier nicht explizit gezeigt) an der jeweiligen Halbschale 114 bzw. 115 angeschraubt. Hierzu sind an den Halbschalen 114 und 115 jeweils Schraubenaufnahmelöcher 148 (nur exemplarisch beziffert) vorgesehen, wobei diese Schraubenaufnahmelöcher 148 auch zur Befestigung der Halbschalen 114 und 115 an der ihnen jeweils zugeordneten Trageinrichtungshälften 7 bzw. 8 dienen.

Es versteht sich, dass es sich bei den vorstehend erläuterten Ausführungsbeispielen lediglich um eine erste Ausgestaltung der erfindungsgemäßen Streckblasvorrichtung handelt. Insofern beschränkt sich die Ausgestaltung der Erfindung nicht lediglich auf diese Ausführungsbeispiele.

Die Anmelderin behält sich vor, einzelne oder sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung zum Streckblasen
- 2: Trageinrichtung
- 3: Blasform
- 4: erstes seitliches Schalenteil
- 5: zweites seitliches Schalenteil
- 6: Bodenteil
- 7: erste Trageinrichtungshälfte
- 8: zweite Trageinrichtungshälfte
- 9: Tragstange
- 10: Bodenteilklemmeinrichtung
- 11: Bodenteilaufnahme
- 12: erste Halteeinrichtung
- 13: zweite Halteeinrichtung
- 14: erste Halbschale/Halteschale
- 15: zweite Halbschale/Halteschale
- 16: Flanschverbindung
- 17: weitere Flanschverbindung
- 18: Formschlussverbindung
- 19: Anschluss für Temperiermedium
- 20: Reinraum
- 21: Anlage zum Streckblasen
- 22: keramische Formschlussbereiche
- 23: Feder-Nut-Einrichtung
- 24: Feder
- 25: Nut
- 26: erste O-Ring-Dichtung
- 27: zweite O-Ring-Dichtung
- 28: kreisrunde keramische Bodenteilaufnahme
- 29: kreisförmige O-Ring-Aufnahmenut
- 30: rechteckige keramische Bodenteilaufnahme
- 31: quadratische O-Ring-Aufnahme

- 111: alternative Bodenteilaufnahme
- 114: erste alternative Halbschale
- 115: zweite alternative Halbschale
- 118: Formschlussverbindung
- 135: Zentralring
- 136: Hinterschneidung
- 137: erste Außennut
- 138: zweite Außennut
- 139: erste Materialausnehmung
- 140: zweite Materialausnehmung
- 141: erste Innennut
- 142: zweite Innennut
- 143: erster Nutstein
- 144: zweiter Nutstein
- 145: erste Aussparung
- 146: zweite Aussparung
- 147: lösbares Einlegeteil
- 148: Schraubenaufnahmelöcher

## Patentansprüche

1. Vorrichtung (1) zum Umformen von Kunststoffvorformlingen zu Kunststoffbehältnissen mit einer Trageinrichtung (2) zum Tragen einer Blasform (3) umfassend wenigstens zwei Schalenteile (4, 5) und ein Bodenteil (6) und mit einer Bodenteilklemmeinrichtung (10) umfassend eine Bodenteilaufnahme (11; 28; 30; 111) und Halteeinrichtungen (12, 13 bzw. 14, 15; 114, 115) zum Halten der Bodenteilaufnahme (11; 111), bei welcher die Bodenteilaufnahme (11; 28; 30; 111) über eine Formschlussverbindung (18; 118) mit den Halteeinrichtungen (12, 13 bzw. 14, 15; 114, 115) verklemmbar ist,
**dadurch gekennzeichnet, dass**
die Formschlussverbindung (18; 118) keramisch ausgestalte Formschlussbereiche (22) aufweist.

2. Streckblasvorrichtung (1) nach Anspruch 1,
**dadurch gekennzeichnet, dass**
die Bodenteilaufnahme (11; 28; 30;) und/oder die Halteeinrichtungen (12, 13 bzw. 14, 15) vollständig keramisch ausgestaltet sind.

3. Streckblasvorrichtung (1) nach Anspruch 1 oder 2,
**dadurch gekennzeichnet, dass**
sowohl die Bodenteilaufnahme (111, 135) als auch die Halteeinrichtungen (114, 115) jeweils wenigstens eine Nut (137, 138; 141, 142) aufweisen, welche mittels wenigstens einem Nutstein (143, 144) derart miteinander korrespondierenden, dass die Bodenteilaufnahme (111, 135) und die Halteeinrichtungen (114, 115) formschlüssig miteinander verbunden sind, wobei der wenigstens eine Nutstein (143, 144) aus einem Werkstoff, insbesondere aus einem keramischen Werkstoff, hergestellt ist, welcher von dem Material der Bodenteilaufnahme (111, 135) und der Halteeinrichtungen (114, 115) verschieden ist.

4. Streckblasvorrichtung (1) nach einem der Ansprüche 1 bis 3,
**dadurch gekennzeichnet, dass**
die Bodenteilaufnahme (111, 135) radial außen eine Hinterschneidung (136) mit wenigstens zwei Nuten (136, 137) aufweist, wobei die Nuten (136, 137) der Bodenteilaufnahme (135) in Umfangsrichtung durch Materialausnehmungen (139, 140), welche sich radial bis weiter nach innen erstrecken als die Hinterschneidung (136), voneinander getrennt angeordnet sind.

5. Streckblasvorrichtung (1) nach einem der Ansprüche 1 bis 4,
**dadurch gekennzeichnet, dass**
die Bodenteilaufnahme (11; 28; 30; 111, 135) gegenüber dem Bodenteil (6) mittels wenigstens einer O-Ringdichtung (26, 27) abgedichtet ist.

6. Streckblasvorrichtung (1) nach einem der Ansprüche 1 bis 5,
**dadurch gekennzeichnet, dass**
die Streckblasvorrichtung (1) in einem Reinraum (20) einer Anlage (21) zum Streckblasen von Kunststoffvorformlingen angeordnet ist.

7. Streckblasvorrichtung (1) nach einem der Ansprüche 1 bis 6,
**dadurch gekennzeichnet, dass**
die Formschlussverbindung (18) eine Feder-Nut-Einrichtung (23) umfasst, bei welcher eine Feder (24) und/oder eine Nut (25) der Bodenteilklemmeinrichtung (10) zumindest teilweise keramisch ausgestaltet sind.

8. Streckblasvorrichtung (1) nach einem der Ansprüche 1 bis 7,
**dadurch gekennzeichnet, dass**
eine **Feder (24; 143, 144) und/oder eine Nut (25)** der Bodenteilklemmeinrichtung (10) wenigstens einen keramischen Grundkörper aufweist, welcher als lösbares Einlegeteil (147) an der Bodenteilklemmeinrichtung (10) auswechselbar gelagert ist.

9. Anlage (21) zum Streckblasen von Kunststoffvorformlingen zu Kunststoffbehältern mit einem Reinraum (20) und mit wenigstens einer Blasstation umfassend eine Blasform (3) zur Formgebung der Kunststoffvorformlinge,
**dadurch gekennzeichnet, dass**
die Streckblasanlage (21) eine Streckblasvorrichtung (1) nach einem der vorstehend genannten Ansprüche aufweist.

10. Verwendung eines Keramikbauteils (14, 15; 28; 30; 143, 144, 147) und/oder eines mit einer Keramik zumindest teilweise beschichten Funktionsbauteils als Schmiermittelersatz an einer Formschlussverbindung (18; 118) einer Streckblasvorrichtung (1) in einem Reinraum (20).
